# EUROPEAN PATENT SPECIFICATION

(11) **EP 0 345 921 B1**
(45) Date of publication and mention of the grant of the patent: **06.07.1994**
(21) Application number: 89302353.1
(22) Date of filing: 09.03.1989
(51) Int. Cl.: B22F 1/00, B22F 9/08, B22F 9/10

(54) **Powder additives for coating materials or for plastics**
Pulverförmige Additive zum Beschichten von Substanzen oder von Kunststoffen
Additifs en poudre pour coucher les matériaux ou pour les plastiques

(30) Priority: 12.05.1988 JP 115485/88; 12.05.1988 JP 115486/88; 17.06.1988 JP 149450/88; 17.06.1988 JP 149451/88; 22.07.1988 JP 183098/88
(43) Date of publication of application: 13.12.1989
(73) Proprietor: TEIKOKU PISTON RING CO. LTD., Chuo-ku Tokyo (JP); Masumoto, Tsuyoshi, Miyagi (JP)
(72) Inventor: Masumoto, Tsuyoshi, Sendai-shi Miyagi-ken (JP); Inoue, Akihisa, Sendai-shi Miyagi-ken (JP); Oguchi, Masahiro, Chuo-ku Tokyo (JP); Harakawa, Yoshio, Chuo-ku Tokyo (JP)
(74) Representative: Calamita, Roberto

(56) References cited:
- EP-A- 0 017 723
- EP-A- 0 223 202
- EP-A- 0 226 323
- GB-A- 1 276 851
- US-A- 4 063 942
- US-A- 4 692 305
- US-A- 4 701 289
- US-A- 4 743 297

## Description

The present invention relates to a powder additive for coating materials or plastics, which is suitable for mixing into coating materials to impart corrosion resistance and weathering resistance, or for mixing into plastics or rubbers to impart electromagnetic shielding properties or magnetic shielding properties, and to a method of preparing the same.

In fields where corrosion resistance and weathering resistance are required, coating materials have been used which have been mixed with powders comprising glass or metals. These powders can be grouped into (1) those in which the powder itself has corrosion resistance and the corrosion resistance can be imparted by covering a coating surface with the powder, as exemplified by glass powders and stainless steel powders, (2) those in which the powder serves as a sacrificial electrode which prevents corrosion of a coating surface, as exemplified by zinc powders, and (3) those which can improve weathering resistance by the application of a metallic coating, as exemplified by aluminium powders.

Of these powders, the glass powders that are used comprise particles that resemble fragments of spheres which are obtained by breaking glass balloons.

The stainless steel powders that are used are those obtained by bringing a rolled sheet of stainless steel into intergranular corrosion followed by physical grinding, or those obtained by water-atomizing molten stainless steel to form a powder and then physically forcing the powder to comprise flat particles by means of a stamp mill or the like.

The zinc powders that are used are those obtained by heating and vaporizing a zinc metal in a retort, introducing the resulting zinc vapour into an air-cut-off condensor to effect rapid-cooling condensation, thus obtaining a spherically particulate powder, and physically forcing the resulting powder to comprise flat particles by means of a stamp mill or the like.

The aluminium powders that are used are those prepared by subjecting molten aluminium to gas-atomizing to obtain a powder, and physically forcing the powder to comprise flat particles.

In recent years, a variety of amorphous alloys having good corrosion resistance have also been developed, and attempts have been made to impart better corrosion resistance by forming these amorphous alloys into a powder and mixing the powder into a coating material.

As an example of such attempts, Japanese Unexamined Patent Publications No. 252668/1985 and No. 252669/1985 suggest the addition to a coating material of an amorphous alloy powder comprising scaly particles of several tens to several hundreds of micrometres in length or width and not more than 5 micrometres in thickness.

In general, those powders comprising leaf-shaped particles are considered to be preferred as such powder additives for coating materials. This is because, when the powders are mixed into a coating resin material and the mixture is coated onto a surface by brushing or spraying, the powder particles are laid overlapping in parallel with the coating surface owing to the surface tension produced in the curing of the resin (this is called a leafing phenomenon) to form a continuous film of the powder. This protects materials from the air and imparts good corrosion resistance and weathering resistance. However, even with this leaf-shaped particulate powder there may be the problem that the smoothness of a coating becomes poorer with increase in thickness of the powder particles. Moreover, leaf-shaped particles having an excessively long major axis tend to cause cracking or peeling of the coating, resulting in a lowering of the strength of the coating.

Furthermore glass powders having particles which resemble fragments of spheres and prepared by breaking glass balloons, cannot exhibit perfect particulate flatness, and hence cannot cause the above leafing phenomenon to a desirable degree, and so it has been impossible to impart sufficient corrosion resistance.

Stainless steel powders prepared by bringing a rolled sheet into intergranular corrosion followed by physical grinding of the stainless steel, and the zinc or aluminium atomized powders physically forced to have flat particles also have particles which tend to become irregular in their shape, so that it has been impossible to obtain such powders comprising sufficiently thin and flat particles. For this reason, it has to date been impossible to cause the above leafing phenomenon to a desirable degree.

US-A-4063942 describes the preparation of a steel flake product, the resultant particles being relatively large and having a thickness of no more than around 0.5mm. Such particles have a shape which includes a propeller like twist and a roughened outline over some of the periphery. Such a method does not lead to the production of thin and flat particles.

For the above-mentioned amorphous alloy powders described in Japanese Unexamined Patent Publications No. 252668/1985 and No. 252669/1985, limitations are made on the length, width and thickness in respect of the particle shape.

The above amorphous alloy powders are prepared by dropping a powder previously formed into an alloy by a method such as atomizing, causing the powder to melt as it falls, using a heat source such as an acetylene flame, an oxygen-hydrogen flame or an oxygen-propane flame produced from a concentrically disposed nozzle, and rapidly-cooling the molten droplets simultaneously with rolling using a twin-roll mill.

Using this method, however, it has been difficult to prepare a powder comprising particles having their shape defined in respect of the minimum thickness, aspect ratio (ratio of the major axis to thickness), or ratio of the major axis to the minor axis. Moreover, since in this method the powder is caused to melt on the way it falls, the powder cannot be fed in a large quantity, so that it has been impossible to produce the desired powder in a large quantity on an industrial scale.

Methods of preparing a flaky powder using amorphous alloys which are also known are a method in which hydrogen is adsorbed onto a ribbon or strip prepared using to a conventional single roll method or cavitation method to make it brittle, followed by grinding by means of a stamp mill or ball mill, and a method in which a melt is atomized on the roll surface in a single roll method to prepare a powder comprising particles of irregular shapes.

In these methods, however, the resulting powder usually has a particle thickness of approximately from 5 to 20 micrometres, and hence cracking may sometimes occur on the coating when the resulting powder is mixed into resin and used as a coating material. The powder could thus not be said to be suitable as a powder for coating materials.

On the other hand, in various plastics or rubbers, it is known to add a conductive filler in order to impart electromagentic shielding, or to add a reinforcing filler in order to reinforce plastics. Particularly used as the conductive filler is a metal filler comprising copper, nickel, silver or the like.

Widely used as these metal fillers are fibrous or dendritic fillers prepared by cutting metals using a chatter vibrating method using a lathe turning machine.

Since, however, almost all of these metal fillers are fibrous or dendritic, a number of gaps are formed between fillers when they are mixed into plastics or rubbers. This means that no significant effect can be obtained particularly in the case of metal fillers used for the purpose of electromagnetic shielding.

An object of the present invention is therefore to provide a powder additive for coating materials, that can impart superior corrosion resistance and weathering resistance.

Another object of the present invention is therefore to provide a powder additive for plastics or rubbers, that can impart superior electromagnetic shielding properties.

A further object of the present invention is to provide a method of preparing a powder to be added into coating materials, plastics or rubbers, which can produce the powder in a large quantity and in a high yield on an industrial scale.

We have found that in order to cause the leafing phenomenon to a desirable degree and impart a good corrosion resistance, consideration should be given to a required minimum thickness, aspect ratio (ratio of the major axis to thickness), ratio of the major axis to the minor axis, or the like.

We therefore provide, according to one aspect of the present invention, a powder additive for coating materials, for plastics or for rubbers, comprising particles of an amorphous alloy, said particles having a thickness of 0.5 to 4 micrometres, a minor axis/major axis of from 5 to 500 micrometres, an aspect ratio (ratio of the major axis to the thickness) of not less than 5, and a ratio of the minor axis to the major axis of from 1 to 10, the particles being substantially flat and oval or elliptical (preferably, an elliptical leaf).

The particles of the present invention are substantially flat and oval or ellipitical.

Thus, for example, the particles may include substantially flat flakes.

According to another aspect of the present invention there is provided a method of preparing a powder additive according to the invention, said method comprising melting an alloy, causing the resulting melt to flow out from a nozzle and jetting a gas onto the melt to form droplets of the melt, followed by cooling to effect solidification thereof, characterized in that a cone- or horn-shaped rotating cooling member is provided in the direcion of flow of said droplets, and said droplets are caused to collide with the surface of said rotating cooling member before they solidify, followed by cooling to effect solidification.

Since the powder of the present invention comprises particles having the shape properties as described above, it can readily cause the leafing phenomenon when added into coating materials and the coating applied and hence the coating surface can be effectively covered with the powder, so that it can impart superior corrosion resistance and weathering resistance as compared with conventional powders. The addition of the powder can also help keep the smoothness or strength of the coating in a good state.

Also since the powder of the present invention comprises particles having the shape properties as described above, it has a larger surface area, and hence it can impart superior electromagnetic shielding properties when added to plastices. In this instance, when press molding of plastics is carried out, the particles of the powder are oriented in parallel to each other owing to the pressure of pressing and the planes of the particles face in the same direction, so that it can impart more superior electromagnetic shielding properties in respect to a specific direction.

The preparation method of the present invention is characterized by causing the droplets of the melt to collide against a cone or horn type rotating cooling member, and this preparation method enables production of the powder comprising the particles having the above shape properties in high yield (for example, 70% or more) and in large quantity. In this connection, causing the droplets of the melt to collide against a cylindrical rotating cooling member as conventionally used in preparing amorphous alloys results largely in the formation of a powder comprising particles having a non-uniform thickness and also having irregular shapes, and hence it has been impossible to prepare the powder comprising the particles having the above shape properties using conventional methods.

The reason why the powder comprising the particles having the above shape properties can be efficiently prepared according to the present invention is considered to be as follows: employment of the cone or horn type rotating cooling member causes the surface of the rotating cooling member to be obliquely disposed in the direction of the flow of the droplets. As a result, when the droplets collide against the oblique surface of the rotating cooling member, each droplet extends in the direction of rotation of the rotating cooling member because of the centrifugal force and at the same time also extends along the oblique surface of the rotating cooling member because of the drop in kinetic energy. Thus, the droplet is more widely extended and fromed into a thin leaf-shaped powder particle.

The invention will now be described with reference to the accompanying drawings in which:
Fig. 1 is a schematic representation illustrating an example of apparatus which may be used for carrying out the method of the present invention;
Figs. 2(a) and 2(b) are views illustrating other examples of the rotating cooling member which may be used in the above apparatus;
Fig. 3 is a scanning electron microscope photograph at magnification 100 of an amorphous alloy powder obtained in Example 1;
Fig.4 is a scanning electron microscope photograph at magnification 90 of an amorphous aluminium alloy powder obtained in Example 2;
Fig. 5 is a perspective view illustrating the particle shape of a powder obtained by crushing a glass balloon; and
Fig. 6 is a perspective view illustrating the particle shape of a glass powder obtained by the preparation method of the present invention.

In the present invention, the particles of the powder each have a thickness of 0.5 to 4 micrometres, a minor axis/major axis of from 5 to 500 micrometres, an aspect ratio (ratio of the major axis to the thickness) of not less than 5, and a ratio of the minor axis to the major axis of from 1 to 10, and are substantially flat and oval or elliptical. Further embodiments of the invention are defined in the claims 1 to 11. Particularly when used as a powder additive for coating materials, if the abovementioned thickness is less than 0.5 micrometers there is a problem in maintaining corrosion resistance over a long period of time, and if the thickness is more than 4 micrometres it may result in poor smoothness of the coating. A minor axis less than 5 micrometres may result in non-uniformity in the mutual overlapping of powder particles, and a major axis more than 500 micrometres may cause deterioration of the strength of a coating. Also, an aspect ratio less than 5 makes it difficult to cause the leafing phenomenon. Furthermore, a ratio of minor axis to major axis of greater than 10 tends to produce gaps between powder particles, making it impossible to effectively impart the desired properties. In a preferred embodiment of the present invention, the particles may more preferably have a thickness of 1 to 4 micrometres, a minor axis/major axis of from 5 to 400 micrometres, an aspect ratio of not less than 5, and a ratio of minor axis to major axis of from 1 to 5.

In the present specification, by "a minor axis/major axis of from 5 to 500 micrometres" is meant that, when a leaf-shaped particle is viewed from the direction perpendicular to its plane, the axis at the shortest part is not less than 5 micrometres and the axis at the longest part does not exceed 500 micrometres.

The powder of the present invention may preferably comprise at least one of the following materials:
(1) An amorphous alloy consisting of from 5 to 12% of Ni, from 5 to 25% of Cr, from 0.3 to 5.0% of Mo, from 8 to 13% of P, from 7 to 15% of C, all in atom %, and the balance of Fe and incidental impurities;
(2) an amorphous alloy consisting of from 5 to 40% of Cr, from 15 to 25% of P, all in atom%, and the balance of Ni and incidental impurities;
(3) an amorphous alloy consisting of from 40 to 60% of (Nb, Ta) in atom %, and the balance of Ni and incidental impurities;
(4) an aluminium alloy having a composition represented by the general formula: AlₐM_{b}X_{c}
   (wherein M represents one or more metallic element(s) selected from V, Cr, Mn, Fe, Co, Ni, Cu, Zr, Ti, Mo, W, Ca, Li, Mg and Si; X represents one or more element(s) selected from Y, La, Ce, Sm, Nd, Hf, Nb, Ta and Mm (Misch metal); and a, b and c are such that 50 ≦ a ≦ 95, 0.5 ≦ b ≦ 35 and 0.5 ≦ c ≦ 25 in atom % respectively) and the balance of incidental impurities;
and comprising an amorphous phase or an amorphous and finely crystalline mixed phase.

Materials (1), (2) and (3) are suitably used when added to coating materials for the purpose of imparting corrosion resistance. Powders of these materials have corrosion resistance in themselves, and the corrosion resistance can be imparted by covering a coating surface with any of these powders. Among these, materials (1), (2) and (3), being amorphous, can impart better corrosion resistance.

The composition defined for materials (1), (2), (3) and (4) is the composition with which an amorphous phase can be readily formed by rapid-cooling solidifcation, and a composition outside the above composition makes it difficult to formthe amorphous phase.

When the powder of the present invention is used as an additive for coating materials, the powder may preferably be added into the coating materials in an amount of approximately from 5 to 20 vol.%. An amount of the powder less than 5 vol.% results, when coated onto a surface, in an increase in the part consisting only of the basis coating material in the coating, and therefore brings about no significant increase in the desired properties. Also, an amount more than 20 vol.% may result in weakness in the strength of the resulting coating, and tends to cause cracking or peeling or worsen the coating adhesion. The amount of powder added can be appropriately varied depending on the types of the powder and coating materials to be used.

As binder components in the coating materials may conveniently be used a variety of synthetic resins commonly used in coating materials. Preferably used are vinyl resins, acrylic resins, polyurethane resins, epoxy resins or the like. However, the binder components for the coating materials should include monomers or oligomers of these resins, if the coating materials used are cured after being coated onto a surface.

To the coating materials, can be optionally added solvents, hardening agents, pigments, thickening agents, dispersing agents, stabilizers and so forth, in addition to the above powder and binder components. The solvents may be appropriately selected depending on the type of the resins to be used, and, for example, xylene, toluene, alcohol, acetone, ethyl acetate or water may be used. As to the type of the coating materials, there can be employed various types such as solvent types, emulsion types, non-emulsion types or powder types.

Inorganic binders can also be used as the binder components for the coating materials, for example a coating material that uses as a binder the product of the addition of a small amount of sodium bicarbonate in an aqueous sodium silicate solution, and is hardened by spraying an aqueous phosphoric acid solution after coating.

This coating material can be coated onto a surface using various methods, e.g. by brushing or by spray coating. In this case, in order to disperse the powder to bring about good adhesion, a surface treatment may be applied using surface treatment agents such as surface active agents and covering agents and surface improvers before coating.

When the powder of the present invention is used as a filler for plastics, the powder may preferably be mixed into plastics in an amount of from 10 to 60% by weight. An amount less than 10% by weight makes it impossible to obtain a sufficient effect of mixing the powder, and an amount more than 60% by weight tends to result in an adverse effect on the appearance or strength of plastics.

Freely usable as the plastics are various resins e.g. thermoplastic resins such as polyethylene, polypropylene, polystyrene or polyvinyl chloride, thermosetting resins such as phenol resins, epoxy resins, unsaturated polyester resins or polyurethanes, as well as natural rubbers and synthetic rubbers. Reinforcing materials such as glass fibre, or plasticizers, stabilizers, colouring agents, etc may be added if necessary.

A most preferred method of moulding plastics is press moulding. The reason for this is that the powder particles are oriented in the same direction. However, it is also possible to employ other moulding methods such as injection moulding or extrusion. To improve the electromagnetic shielding properties, the powder particles may preferably be oriented in the same direction, but, even if the powder particles are oriented randomly, properties better than those given by conventional fibrous or dendritic fillers can be imparted since the powder of the present invention comprises leaf-shaped particles having large surface areas.

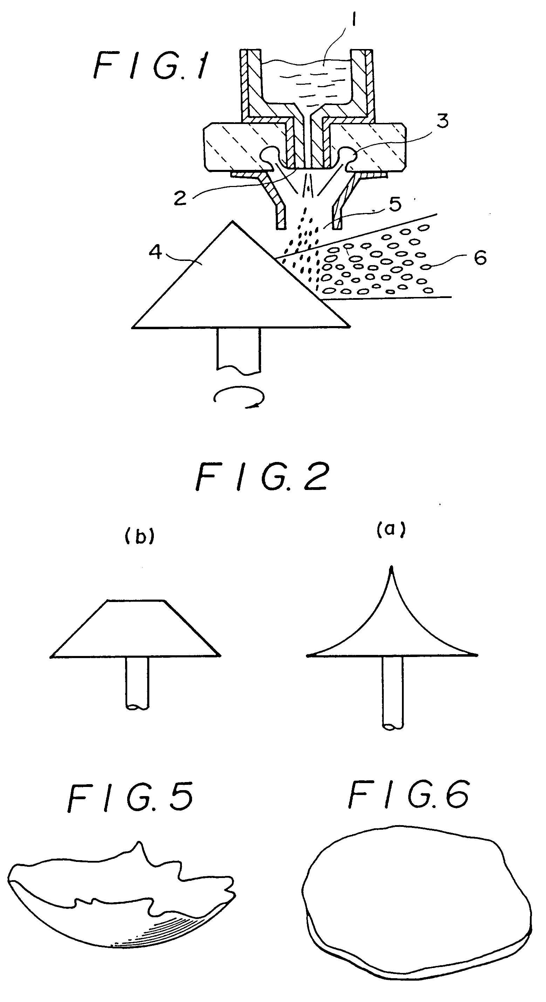

Fig. 1 illustrates an example of an apparatus which may be used for carrying out the method of the present invention.

Materials to be formed into powder are melted using an apparatus such as a high frequency melting furnace or a resistance furnace. The melting temperature may be set approximately to (temperature of the material) plus 50 to 300°C. There is provided a nozzle 2 to cause the resulting melt 1 to flow out, and there is also provided an atomizing nozzle 3 to spray a high pressure gas jet on to the melt 1 which is dropping. The atomizing nozzle 3 is provided, for example, in a circular form so as to surround the nozzle 2, and has a structure such that a high speed gas is jetted from a number of jet outlets toward the flow of the melt 1. Below the nozzle, an umbrella type rotating cooling member 4 is provided so that its rotating shaft is at a position which is shifted a little to the side of a spot directly beneath the nozzle 2.

Thus, the high-pressure gas jet is sprayed from the atomizing nozzle 3 onto the melt 1 that flows out from the nozzle 2 and drops, whereby forming droplets 5 of the melt. The droplets 5 scatter while spreading downwards, colliding against the inclined surface of the rotating cooling member 4, and solidified by cooling, thereby forming a leaf-shaped particulate powder 6 comprising flattened particles. In the present apparatus, a cone type member is used as the rotating cooling member 4, but it is also possible to use a horn type member as illustrated in Fig. 2(a). It may also be possible to use a rotating cooling member wherein, as illustrated in Fig. 2(b), the cone type or horn type member is cut away on the part of its vertical angle to have a trapezoidal cross section i.e. a frustrum-shaped cooling member. A rotating cooling member having a vertical angle of not less than 20° and less than 180° may be used. Incidentally, the smaller the vertical angle becomes, the steeper the slope of the conical surface becomes, so that the powder tends to have a slender particle shape having a greater ratio of minor axis to major axis. On the other hand, the greater the vertical angle, the more gentle the slope of the conical surface becomes, so that the powder tends to have a round particle shape having a smaller ratio of minor axis to major axis.

The gas may preferably be jetted from the atomizing nozzle 3 under a pressure of not less than 20 kg/cm², more preferably not less than 40 kg/cm², and still more preferably not less than 70 kg/cm². Various gases such as argon, helium, nitrogen, air or a mixed gas may be used. Also, the rotating cooling member 4 may preferably be cooled to at least not more than 400°C by means of, for example, water cooling. When powders of the amorphous alloys (1) to (4) described above are formed, it may preferably be cooled to not more than 50°C. The revolution number of the rotating cooling member 4 may preferably be set to from 1,000 to 20,000 rpm, more preferably from 3,000 to 12,000 rpm.

In the preparation method of the present invention, using any of materials (1) to (4) as a starting material makes it possible to obtain powders comprising the materials corresponding to materials (1) to (4), respectively. Materials (1) to (4) do not necessarily have to be amorphous at the starting material stage; they can be caused to have an amorphous phase in the process of the present invention by causing them to collide against the rotating cooling member 4 followed by rapid-cooling solidification.

### Examples

The present invention will be illustrated below by several non-limiting Experiments and Examples.

### Experiment 1 (Evaluation of corrosion resistance of amorphous alloy)

Alloys having compositions as shown in Table 1 were each vacuum-melted and thereafter jetted from a quartz nozzle of 0.4 mm bore diameter under an argon gas jet pressure of 1.0 kg/cm², and this melt was caused to collide against a single roll rotating at a peripheral speed of 30 m/sec to obtain thin ribbons. The resulting thin ribbons were about 1 mm in width and about 30 micrometres in thickness, and X-ray diffraction confirmed that each of them had an amorphous single phase.

On each of the resulting thin ribbons, tests were conducted to examine how they corroded after immersion in 6N-HCl at 30°C for 24 hours, after immersion in 1N-H₂SO₄ at 30°C for 24 hours, and after immersion in 10 M-FeCl₃ at 40°C for 1 hour. Evaluation was made on the basis of the following criteria:
- A:: No change was seen on the surface.
- B:: Pits were seen.
- C:: Seriously corroded.
An evaluation of toughness was also made on each of the resulting thin ribbons to examine whether they can be bond-bent to 180°. On the basis of the evaluation results on corrosion resistance and toughness, an overall evaluation was made as follows:
- AA:: Suited as an alloy powder for use in corrosion-resistant coating materials.
- C:: Unsatisfactory as an alloy powder for use in corrosion-resistant coating materials.

For comparison, as well as the above thin ribbons of amorphous alloys, an evaluation was also made on similar tests in respect of commercially available austenite stainless steels SUS304 and SUS316L. The results obtained are shown in Table 1 (see pages 27-30).

Table 1 shows that samples Nos. 9, 10, 16 to 21, 24 to 28 having a composition regarded as being within the range of (1) from 5 to 12% of Ni, from 5 to 25% of Cr, from 0.3 to 5.0% of Mo, from 8 to 13% of P, from 7 to 15% of C, all in atom %, and the balance of Fe and inevitable impurities, (2) from 5 to 40% of Cr, from 15 to 25% of P, all in atom %, and the balance of Ni and inevitable impurities, or (3) from 40 to 60% of (Nb, Ta) in atom %, and the balance of Ni and inevitable impurities, have the properties which suit them as alloy powders for use in corrosion-resistant coating materials.

### Example 1

### (1) Preparation of alloy powders

Using an apparatus as illustrated in Fig. 1, 500 g each of the alloys respectively having the composition of samples Nos. 9, 10, 17, 19, 21, 24, 25 and 26 in Table 1 was charged into a crucible, and was melted at 1,200°C to make the melt 1.

The resulting melt 1 was flowed out and dropped from the nozzle 2, and argon gas was sprayed from the atomizing nozzle 3 against the dropping melt 1 under a pressure of 100 kg/cm² to form droplets 5. The droplets 5 were caused to collide against a rotating cooling member having a roll diameter of 200 mm⌀, a cone angle of 90° and a revolution number 7,200 rpm to obtain a flaky alloy powder comprising leaf-shaped particles.

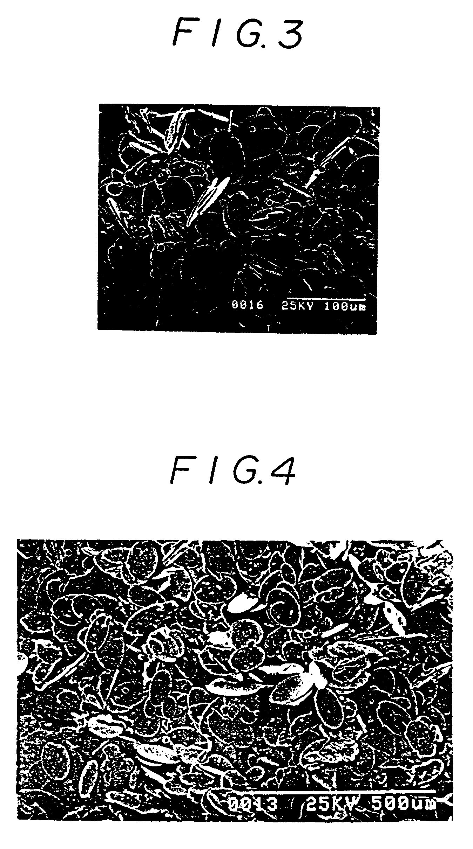

Fig. 3 shows a scanning electron microscope photograph at magnification 100 of an alloy powder obtained using the alloy of sample No. 9 and according to the above method.

Alloy powders of each composition, obtained by the above method, were classified and batched off to give powders comprising particles having the shape properties shown in Table 2. The yield of the powder comprising particles having a thickness of 0.5 to 4 micrometres, a minor axis/major axis of from 5 to 500 micrometers, an aspect ratio (ratio of the major axis to the thickness) of not less than 5, and a ratio of the minor axis to the major axis, of from 1 to 10, which are the shape properties according to the present invention, exceeded 70% in all portions.

For the alloy of sample No. 9, powders were prepared comprising particles having a thickness of from 1 to 4 micrometres, an aspect ratio (ratio of the major axis to the thickness) of 10 to 100, a ratio of the minor axis to the major axis, of from 1 to 5, and a minor axis/major axis of from 5 to 400 micrometres (sample No. 9-1); having a thickness of less than 0.5 micrometres, an aspect ratio (ratio of the major axis to the thickness) of 5 or more, a ratio of the minor axis to the major axis, of from 1 to 5, and a minor axis/major axis of from 5 to 400 micrometres (sample No. 9-2); having a thickness of from 1 to 4 micrometres, an aspect ratio (ratio of the major axis to the thickness) of less than 5, a ratio of the minor axis to the major axis, of from 1 to 10, and a minor axis/major axis of from 5 to 36 micrometres (sample No. 9-3); having a spherical shape (sample No. 9-4); and having a thickness of from 1 to 4 micrometres, an aspect ratio (ratio of the major axis to the thickness) of 5 or more, a ratio of the minor axis to the major axis, of from 1 to 5, and a major axis of 500 micrometers or more (sample No. 9-5), respectively.

For comparison, there was also prepared a SUS304 stainless steel powder (sample No. 13) used in commercially available corrosion-resistant coating materials. This powder comprises particles having a thickness of less than 0.5 micrometres, an aspect ratio (ratio of the major axis to the thickness) of 5 or more, a ratio of the minor axis to the major axis, of from 1 to 10, and a minor axis/major axis of less than 36 micrometres.

### (2) Preparation of coating materials

Coating materials were prepared by mixing 85 vol.% of a polyvinyl acetate resin as a resin binder and 15 vol.% of each of the metal powders obtained as above.

### (3) Evaluation of properties of coatings

SS41 steel sheets of 3 mm in thickness, 20 mm in width and 50 mm in length were made ready for use and sandblasted. Thereafter, they were subjected to ultrasonic washing in Trichlene, and the respective coating materials prepared as above were coated thereon by brushing so as to give a coating thickness of about 100 micrometres. After drying, the state of the coatings was observed and corrosion resistance tests were also carried out. The corrosion resistance tests were carried out by immersing the coatings in aqua regia at 20°C to determine the time by which the mother materials were dissolved out. Results thus obtained are shown in Table 2 (set out below).

Table 2 shows that, as compared with sample No. 13 containing the conventional SUS304 stainless steel powder, superior corrosion resistance can be obtained by the samples Nos. 9-1, 9-2, 9-3, 9-5, 10, 17, 19, 21, 24, 25 and 26 containing the amorphous alloy powder. However, overall evaluation of the state of the coatings and the corrosion resistance shows that particularly preferred are the samples Nos. 9-1, 10, 17, 19, 21, 24, 25 and 26 that contain the powder specified in the present invention, i.e. comprising particles having a thickness of 0.5 to 4 micrometres, a minor axis/major axis of from 5 to 500 micrometers, an aspect ratio (ratio of the major axis to the thickness) of not less than 5, and a ratio of the minor axis to the major axis of from 1 to 10.

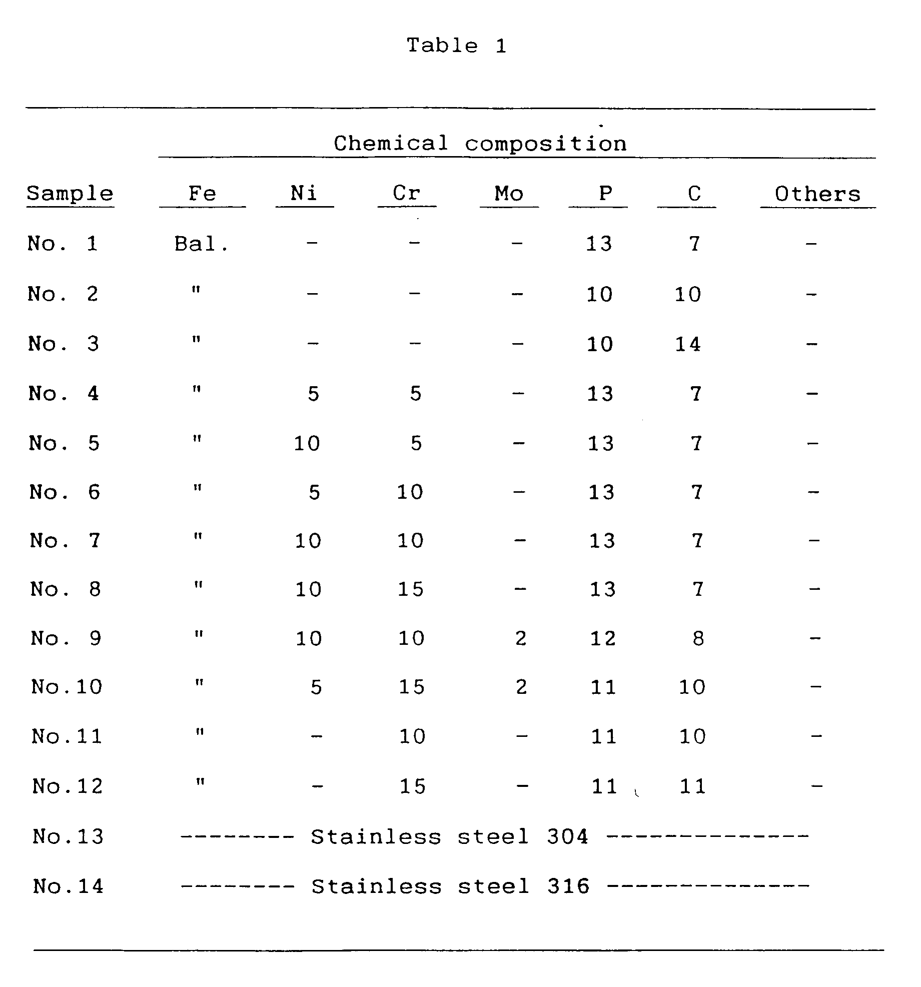

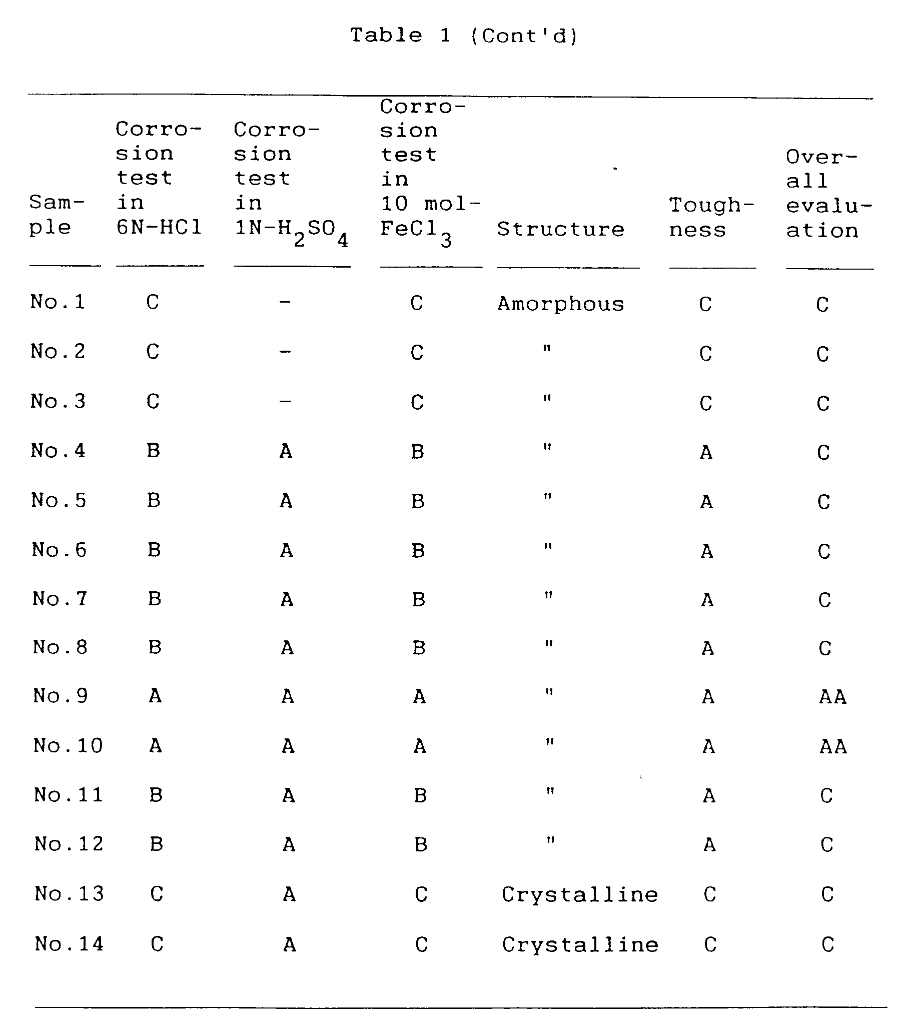

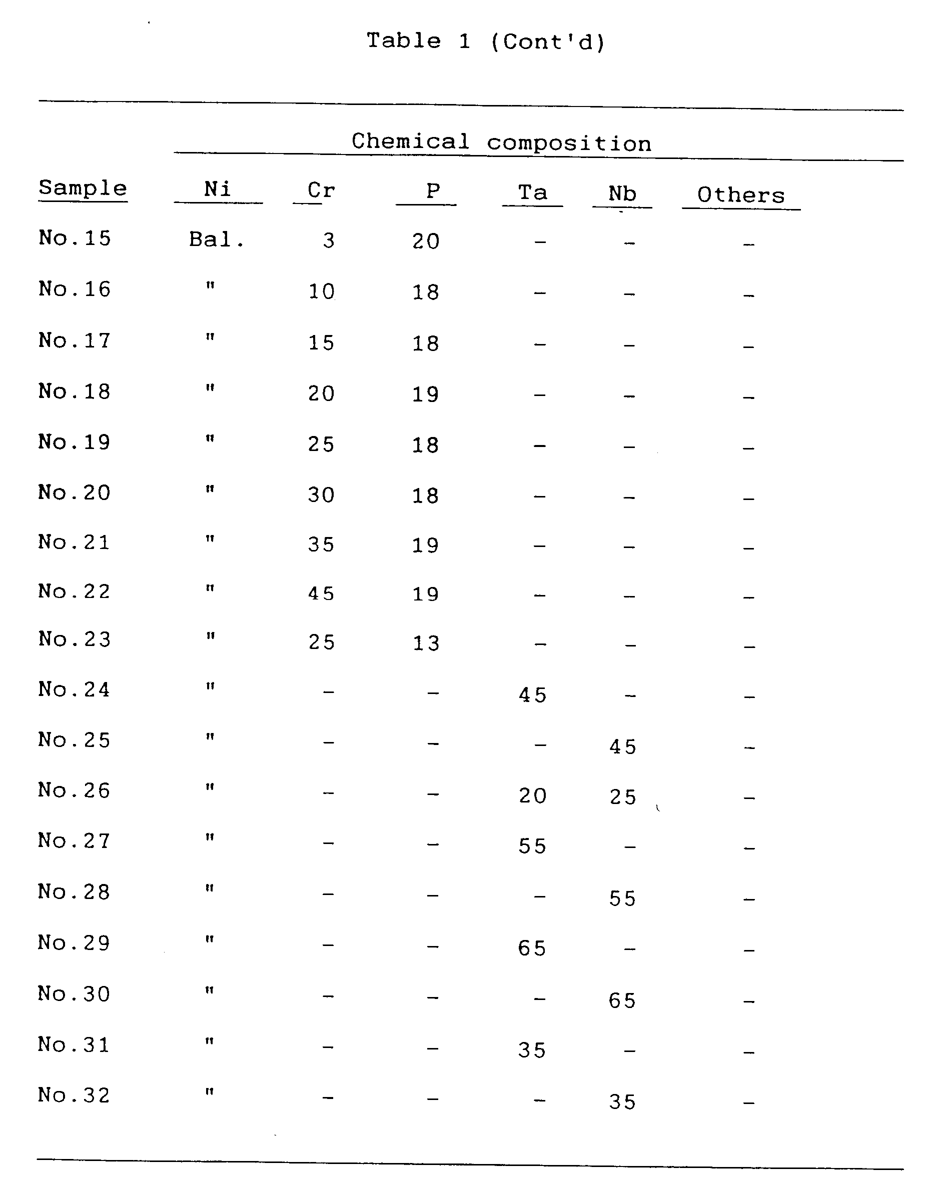

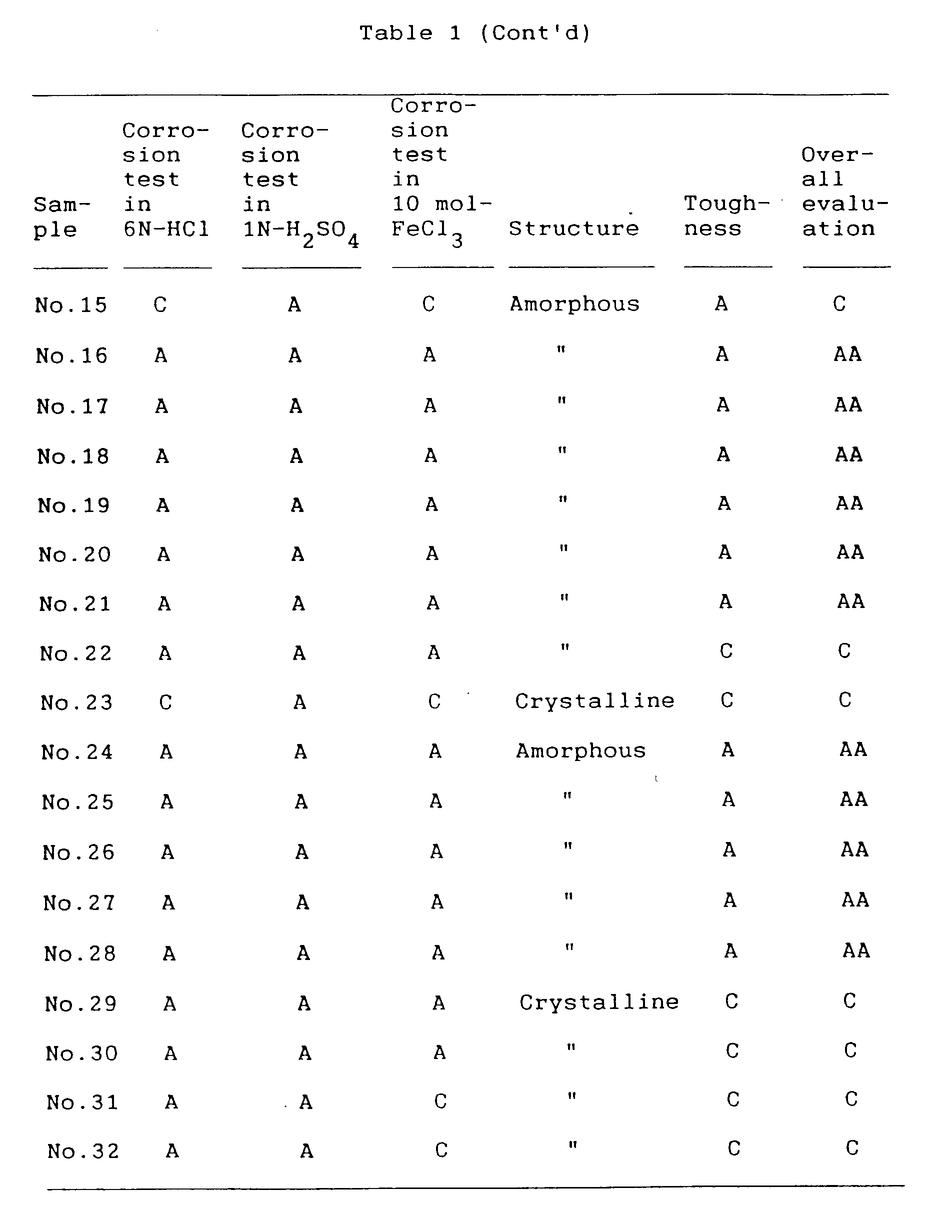

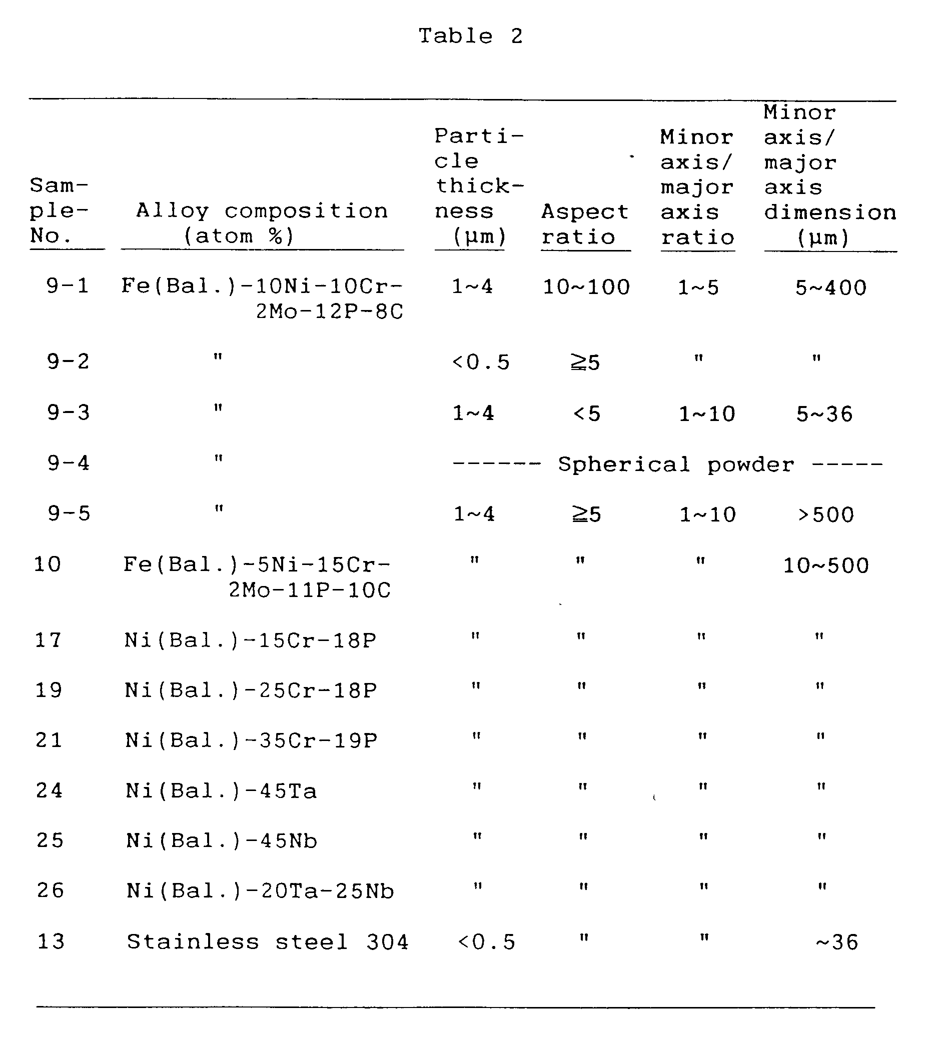

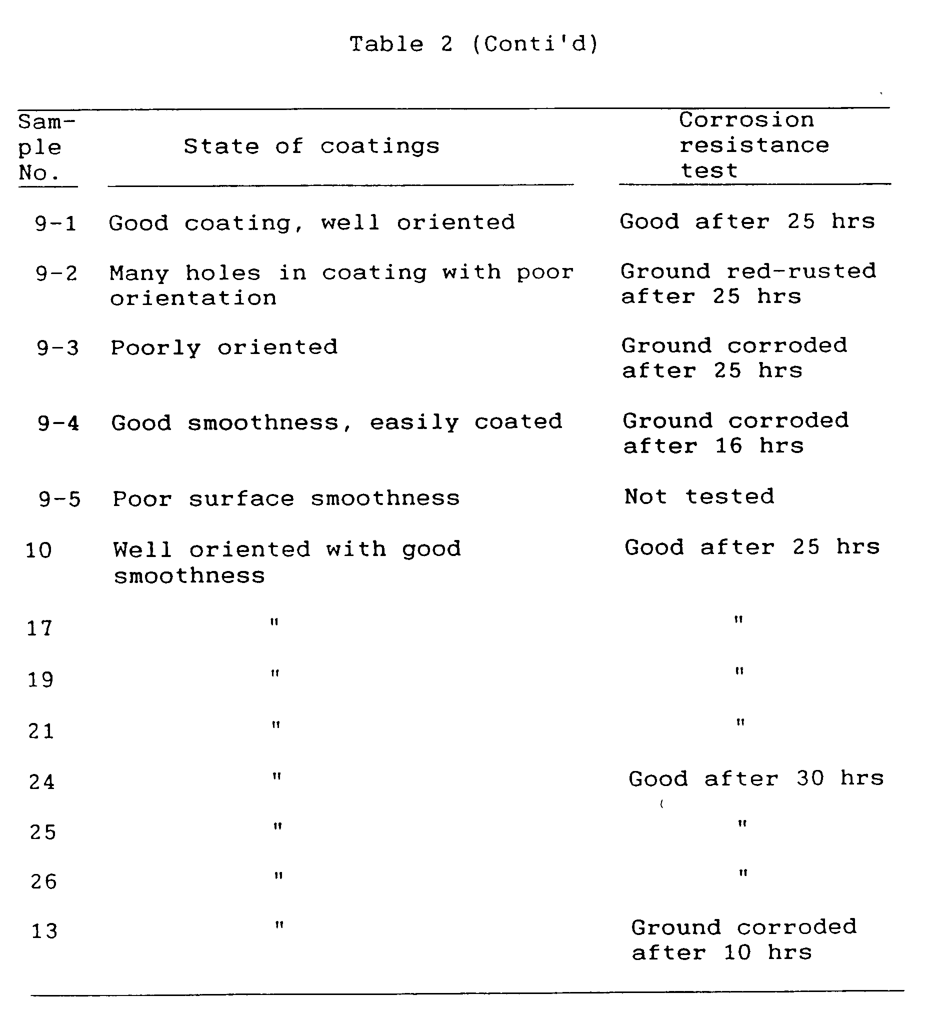

### Experiment 2

### (Evaluation of corrosion resistance of aluminium alloy)

Aluminium alloys having the compositions shown in Table 3 were each vacuum-melted and thereafter jetted from a quartz nozzle of 0.4 mm bore diameter under an argon gas jet pressure of 1.0 kg/cm², and this melt was caused to collide against a single roll rotating at a peripheral speed of 30m/sec to obtain thin ribbons. The resulting thin ribbons were about 1 mm in width and about 30 micrometres in thickness, and X-ray diffraction and TEM observation confirmed that each of them had an amorphous phase or an amorphous and finely crystalline mixed phase.

On each of the resulting thin ribbons, tests were conducted to examine how they corroded after immersion in 1N-HCl at 30°C for 3 hours and after immersion in 1N-NaOH at 30°C for 3 hours. Evaluation was made on the basis of the following criteria:
- A:: No change was seen on the surface.
- B:: Changes were seen on the surface.
- C:: Melted out.

An evaluation of toughness was also made on each of the resulting thin ribbons to examine whether they can be bond-bent to 180°. On the basis of the above evaluation results on corrosion resistance and toughness an overall evaluation was made as follows:
- AA:: Suited as an alloy powder for use in corrosion-resistant coating materials.
- C:: Unsatisfactory as an alloy powder for use in corrosion-resistant coating materials.

For comparison, as well as the above thin ribbons of amorphous alloys, an evaluation was also made on similar tests in respect of commercially available Al(4N) 2024 alloy and Al-Si alloy. The results obtained are shown in Table 3.

Table 3 shows that samples Nos. 1 to 16 having the aluminium alloy composition previously defined in (4) can impart sufficient corrosion resistance when used as powder additives for coating materials.

### Example2

### (1) Preparation of alloy powders

Using the apparatus illustrated in Fig. 1, each of the aluminium alloys respectively having the compsosition of samples Nos. 2, 5, 6, 9, 11, 14 and 15 in Table 3 (set out below) was charged in a crucible, and was melted at 1,000°C to make the melt 1.

The resulting melt 1 was flowed out and dropped from the nozzle 2, and argon gas was sprayed from the atomizing nozzle 3 against the dropping melt 1 under a pressure of 100kg/cm² to form the droplets 5. Before being solidified in the air, the droplets 5 were caused to collide against a rotating cooling member having a roll diameter of 200 mm⌀, a cone angle of 90° and a revolution number of 7,200 rpm to obtain a flaky alloy powder comprising leaf-shaped particles.

Fig. 4 shows a scanning electron microscope photograph at magnification 90 of an alloy powder obtained using the alloy of sample No. 5 and according to the above method.

Alloy powders having each composition, obtained by the above method, were classified and batched off to give those having the shape properties as shown in Table 4. The yield of the powder comprising particles having a thickness of 0.5 to 4 micrometres, a minor axis/major axis of from 5 to 500 micrometres, an aspect ratio (ratio of the major axis to the thickness) of not less than 5, and a ratio of the minor axis to the major axis, of from 1 to 10, which are within the preferred embodiment of the present invention, exceeded 70% in all portions.

With regard to the powder obtained using the alloy of sample No. 5, those powders were prepared which comprise particles having a thickness of from 0.5 to 4 micrometres, an aspect ratio (ratio of the major axis to the thickness) of 10 to 100, and a minor axis/major axis of from 10 to 400 micrometres (sample No. 5-1); having a thickness of less than 0.1 micrometres, an aspect ratio (ratio of the major axis to the thickness) of 5 or more, an a minor axis/major axis of from 10 to 400 micrometres (sample No. 5-2); having a thickness of from 0.5 to 4 micrometres, an aspect ratio (ratio of the major axis to the thickness) of less than 5, and a minor axis/major axis of from 5 to 18 micrometres (sample No. 5-3); having a spherical shape (sample No. 5-4); and having a thickness of from 0.5 to 4 micrometres, an aspect ratio (ratio of the major axis to the thickness) of 5 or more, and a major axis of 500 micrometres or more (sample No. 5-5), respectively.

For comparison, also prepared was an Al (4N) powder (sample No. 19) used in commercially available coating materials. This powder comprises particles having a thickness of 0.3 micrometres, an aspect ratio (ratio of the major axis to the thickness of 5 or more, and a minor axis/major axis of less than 50 micrometres.

### (2) Preparation of coating materials

Coating materials were prepared by mixing 85 vol.% of a polyvinylchloride resin as a resin binder and 15 vol.% of each of the metal powders obtained in the above.

### (3) Evaluation of properties of coatings

SS41 steel sheets of 3 mm in thickness, 20 mm in width and 50 micrometres in length were made ready for use and sandblasted. Thereafter, they were subjected to ultrasonic washing in Trichlene, and the respective coating materials prepared in the above were coated thereon by brushing so as to give a coating thickness of about 100 micrometres. After drying, the state of the coatings was observed and also corrosion resistance tests were carried out by immersing the coatings in aqua regia at 20°C to examine the time by which the mother materials were dissolved out. Results thus obtained are shown in Table 4 (set out below).

Table 4 shows that, as compared with sample No. 19 containing the Al(4N) powder, superior corrosion resistance can be obtained by the samples Nos. 2, 5-1, 5-2, 5-3, 5-5, 6, 9, 11, 14 and 15 containing the aluminium alloy powder comprising an amorphous phase or an amorphous and finely crystalline mixed phase. However, overall evaluation of the state of the coatings and the corrosion resistance shows that particularly preferred are the samples Nos. 2, 5-1, 6, 9, 11,14 and 15 that contain the powder comprising particles having a thickness of 0.5 to 4 micrometres, a minor axis/major axis of from 5 to 500 micrometres, and an aspect ratio (ratio of the major axis to the thickness) of not less than 5. Accordingly, since they have also superior alkali resistance as compared with conventional aluminium, they can be applied as additives for water-soluble metallic coating materials.

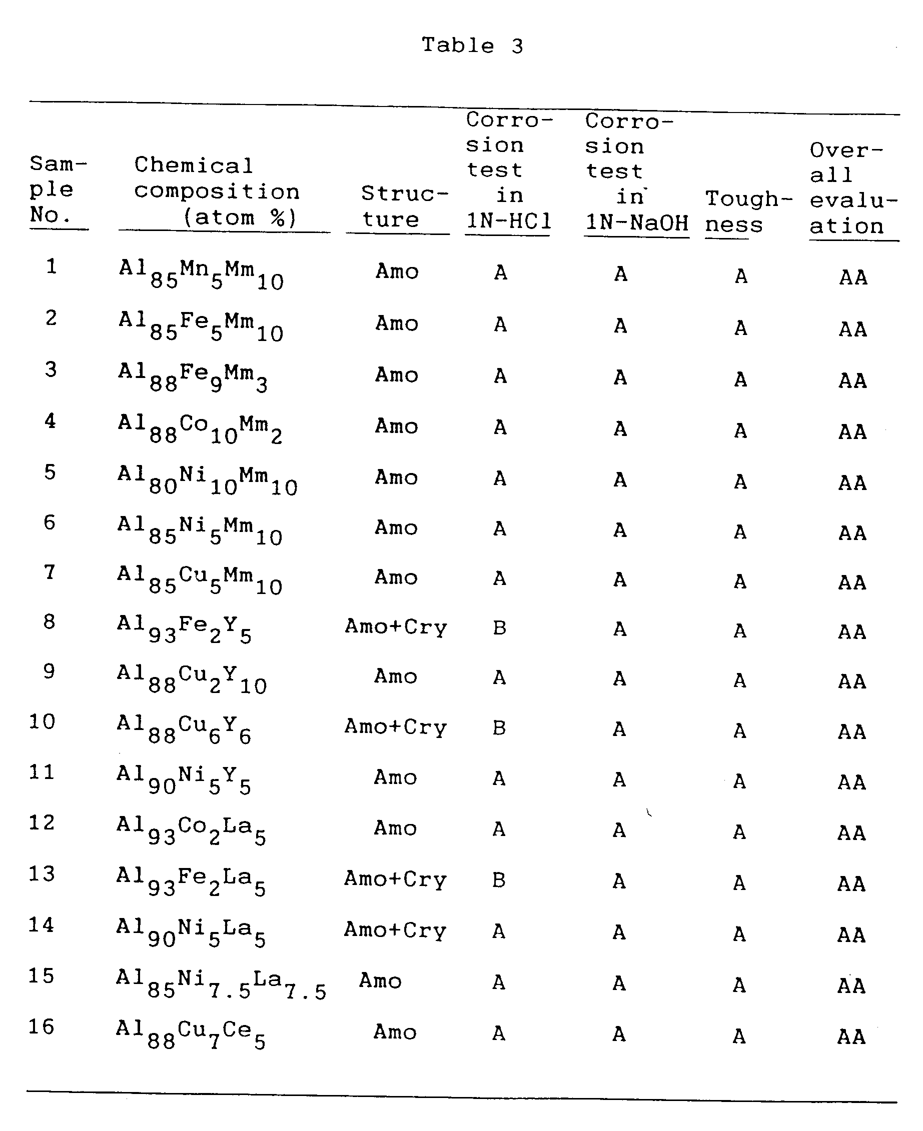

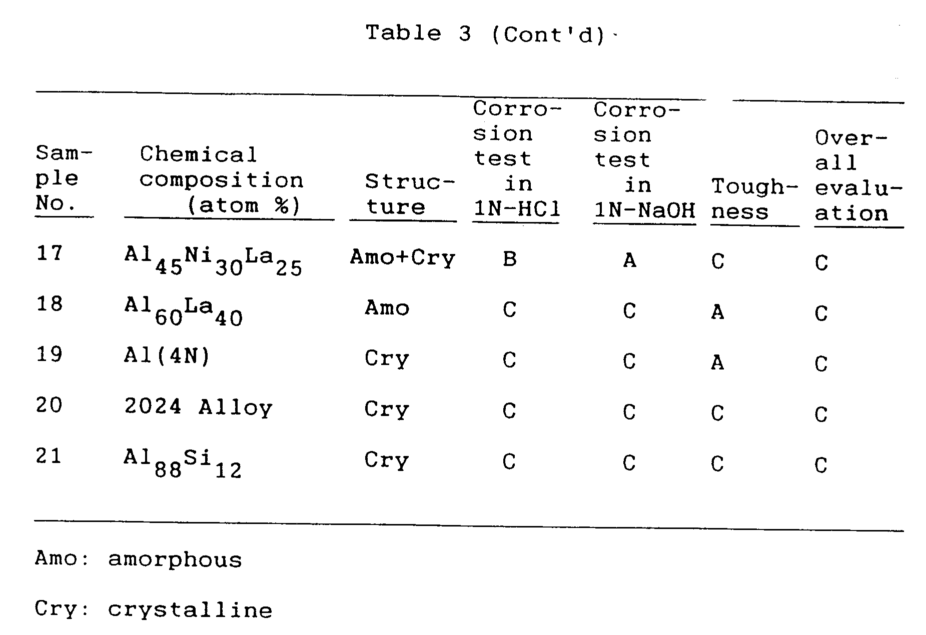

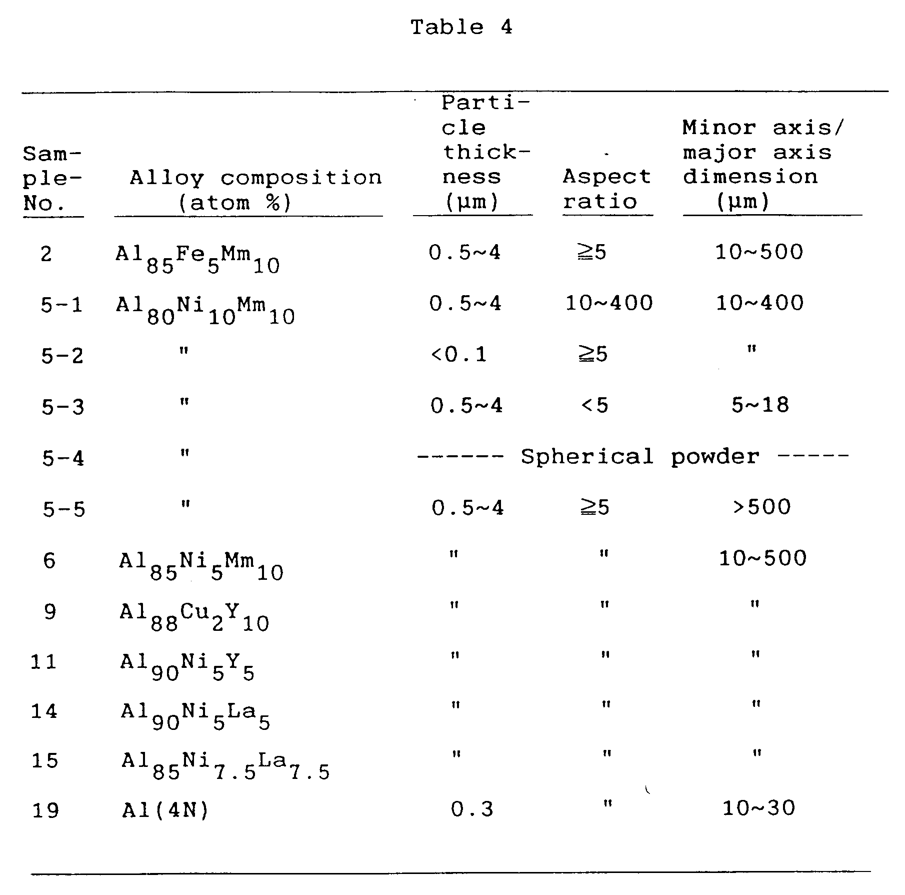

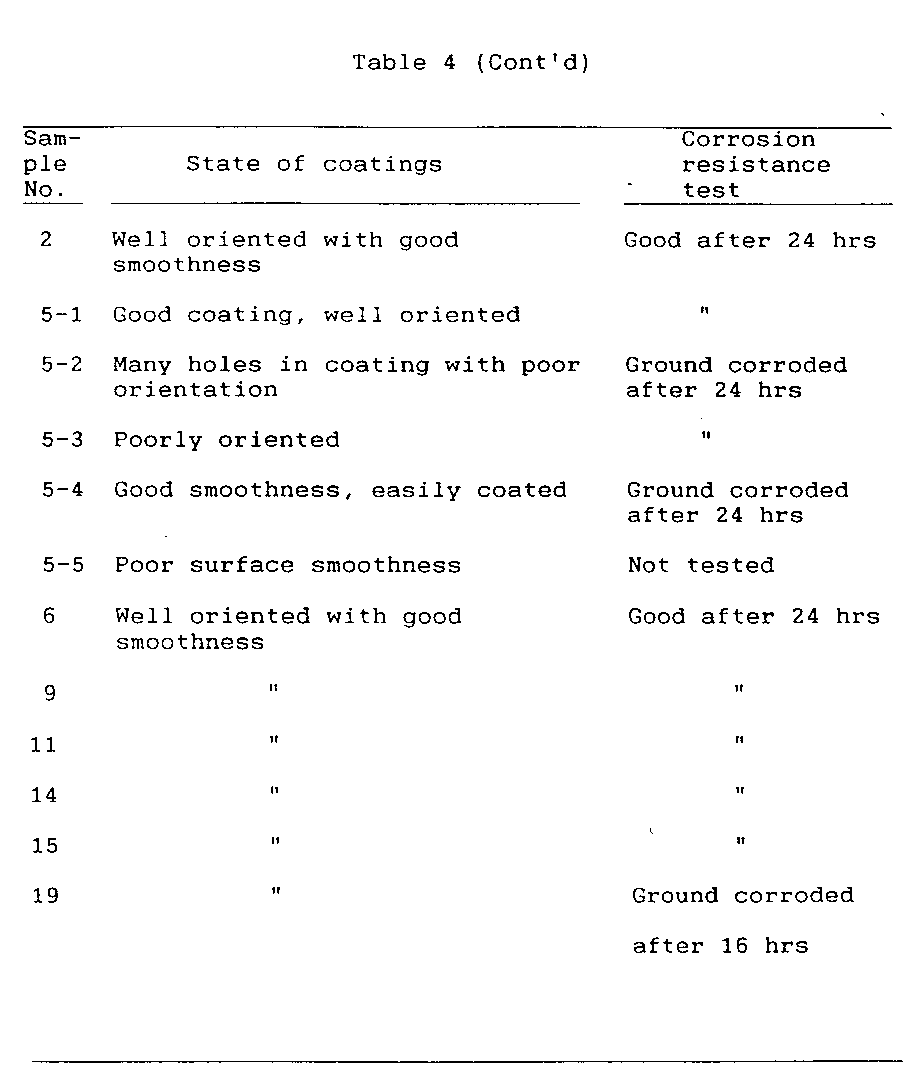

### Example 3

Using an apparatus as illustrated in Fig. 1, 500 g of soda glass was charged into a crucible made of graphite, and was melted at 1,500°C to make the melt 1.

The resulting melt 1 was flowed out and dropped from the nozzle 2, and argon gas was sprayed from the atomizing nozzle 3 on to the dropping melt 1 under a pressure of 100 kg/cm² to form droplets 5. The droplets 5 were caused to collide against a cone type rotating cooling member having a roll diameter of 300 mm⌀, a cone angle of 120° and a revolution number of 7,200 rpm to obtain a flaky powder comprising leaf-shaped particles.

The resulting powder was sieved and batched off to give a powder having the shape properties of a thickness of 0.5 to 4 micrometres (average: 2 micrometres), a minor axis/major axis of from 5 to 500 micrometres, an aspect ratio of not less than 5 (average: 20), and a ratio of the minor axis to the major axis, of from 1 to 10. Yield of the powder obtained was 68%.

### Comparative Example 1

A balloon (a hollow sphere) made of soda-lime glass was mechanically ground to obtain glass powder. This glass powder was sieved to obtain a powder comprising particles having a thickness of from 2 to 5 micrometres (average: 3 micrometres), a minor axis/major axis of from 10 to 100 micrometres, an average aspect ratio of 13 and a ratio of the minor axis to the major axis, of from 1 to 10.

Microscopic observation revealed that the powder obtained in Example 3 comprised particles having a shape as shown in Fig. 6 and the powder obtained in Comparative Example 1 comprised particles having a shape as shown in Fig. 5.

### Experiment 3

85 vol.% of a polyvinyl acetate resin and 15 vol.% of the powder of Example 3 or Comparative Example 1 were mixed, and 5% of a solvent as a diluent, was added to the mixture, thus preparing a coating material containing the powder of Example 3 and a coating material containing the powder of Comparative Example 1, respectively.

SS41 steel sheets of 3.2 mm in thickness, 20 mm in width and 50 mm in length were made ready for use and sandblasted. Thereafter, they were subjected to ultrasonic washing in Trichlene, and then the respective coating materials prepared in the above were coated thereon by brushing so as to give a coating thickness of about 100 micrometres.

After drying, the state of the coatings was observed and also corrosion resistance tests were carried out. The corrosion resistance tests were carried out by immersing the coatings in aqua regia at 20°C to examine the time taken to dissolve out the mother materials. Results thus obtained and shown in Table 5 (set out below).

### Example 4

Using an apparatus as illustrated in Fig. 1, 400 g of zinc of 99.99% purity was set in a crucible made of alumina, and was melted at 550°C to make the melt 1. The resulting melt 1 was flowed out and dropped from the nozzle 2, and argon gas was sprayed from the atomizing nozzle 3 on to the dropping melt 1 under a pressure of 80 kg/cm² to form droplets 5. The droplets 5 were caused to collide against a cone type rotating cooling member having a roll diameter of 300 mm⌀, a cone angle of 120° and a revolution number of 7,200 rpm to obtain a flaky powder comprising leaf-shaped particles.

The resulting powder was sieved and batched off to give a powder having the shape characteristics of a thickness of 0.5 to 4 micrometres, a minor axis/major axis of from 5 to 500 micrometres, an aspect ratio of not less than 5, and a ratio of the minor axis to the major axis, of from 1 to 10. Yield of the powder obtained was less 81%.

### Comparative Example 2

Made ready for use was a commercially available zinc spherically-particulate powder obtained by a gas phase method. This spherical powder comprises zinc having a purity of 99.9% or more and has an average particle diameter of 25 micrometres.

### Experiment 4

Using an inorganic binder obtained by adding a small amount of sodium bicarbonate to an aqueous solution of sodium silicate, the zinc powder obtained in Example 4 or Comparative Example 2 was added therein in an amount of 65, 70, 75, 80, 85 or 90% by weight to obtain the respectively corresponding coating materials.

SS41 steel sheets of 3.2 mm in thickness, 20 mm in width and 50 mm in length were made ready for use and sandblasted. Thereafter, they were subjected to ultrasonic washing in Trichlene, and then the respective coating materials prepared in the above were coated thereon by brushing so as to give a coating thickness of about 100 micrometres. Thereafter, an aqueous phosphoric acid solution was sprayed thereon to effect hardening.

After the coatings were dried, corrosion resistance tests in brine were conducted. To carry out the corrosion resistance tests, cross-shaped cuts were made on coatings, which were immersed in 3% brine to examine blisters of coatings owing to the progress of corrosion from the cuts or melting-out of iron. Temperature of the brine was set to 25 ± 2°C. Results obtained are shown in Table 6 (set out below).

### Example 5

Using an apparatus as illustrated in Fig. 1, 500 g of a stainless steel (SUS316) ingot was set in a crucible made of alumina, and was melted at 1,550°C to make the melt 1. The resulting melt 1 was flowed out and dropped from the nozzle 2, and argon gas was sprayed from the atomizing nozzle 3 against the dropping melt 1 under a pressure of 80 kg/cm² to form the droplets 5. The droplets 5 were caused to collide against a cone type rotating cooling member having a roll diameter of 300 mm⌀, a cone angle of 120° and a revolution number of 7,200 rpm to obtain a flaky powder comprising leaf-shaped particles.

The resulting powder was sieved and batched off to five a powder having the shape characteristics of a thickness of 0.5 to 4 micrometres, a minor axis/major axis of from 5 to 500 micrometres, an aspect ratio of not less than 5, and a ratio of the minor axis to the major axis, of from 1 to 10. Yield of the powder obtained was 72%.

### Comparative Example 3

Made ready for use was a commercially available stainless steel (SUS316) powder. This powder was obtained by forming a melt of stainless steel (SUS316) into an irregularly-shaped-particlulate powder by a water atomizing method, and by annealing the resulting powder. 5% of zinc stearate is added, and then the powder is caused to comprise flat particles in a ball mill. The resulting powder has an irregular particle shape, with a thickness of from 1 to 10 micrometres, a minor axis/major axis of from 5 to 500 micrometres, and an aspect ratio of from 10 to 100.

### Experiment 5

For the stainless steel powder obtained in Example 5 and the stainless steel powder of Comparative Example 3, on immersion in 2N-HCl, the crevice corrosiveness and the particle shape were examined. The results obtained are shown in Table 7 (set out below).

85 vol.% of a polyvinyl acetate resin and 15 vol.% of the powder of Example 5 or Comparative Example 3 were also mixed, and added to the mixture was 5% of a solvent as a diluent, thus preparing a coating material containing the powder of Example 5 and a coating material containing the powder of Comparative Example 3, respectively.

SS41 steel sheets of 3.2 mm in thickness,20 mm in width and 50 mm in length were made ready for use and sandblasted. Thereafter, they were subjected to ultrasonic washing Trichlene, and then the respective coating materials prepared as above were coated thereon by brushing so as to give a coating thickness of about 100 micrometres.

After drying, the state of the coatings was observed and corrosion resistance tests were also carried out by immersing the coatings in aqua regia at 20°C to examine the time by which the mother materials were dissolved out. Results thus obtained are shown in Table 8 (set out below).

### Example 6

Using an apparatus as illustrated in Fig. 1, 500 g of a copper ingot of 99% purity was set in a crucible made of graphite, and was melted at 1,250°C to make the melt 1. The resulting melt 1 was flowed out and dropped from the nozzle 2, and nitrogen gas was sprayed from the atomizing nozzle 3 on to the dropping melt 1 under a pressure of 80 kg/cm² to form the droplets 5. The droplets 5 were caused to collide against a cone type rotating cooling member having a roll diameter of 300 mm⌀, a cone angle of 45° and a revolution number of 10,000 rpm to obtain a flaky powder comprising leaf-shaped particles.

The resulting powder was sieved and batched off to give a powder having the shape characteristics of a thickness of 0.5 to 4 micrometers, a minor axis/major axis of from 5 to 500 micrometres, an aspect ratio of not less than 5, and a ratio of the minor axis to the major axis, of from 1 to 10. Yield of the powder obtained was 75%.

### Comparative Example 4

Made ready for use were three kinds of commerically available copper powders. More specifically, they were an electrolytic powder (dendritic particles; particle diameter: 10 to 40 micrometres), a powder obtained by grinding the electrolytic powder (leafy particles; particle diameter: 10 to 40 micrometres), and an atomized powder (spherical particles; particle diameter: 10 to 40 micrometres).

### Experiment 6

Using an inorganic binder obtained by adding a small amount of sodium bicarbonate to an aqueous solution of sodium silicate, the copper powder obtained in Example 6 or Comparative Example 4 was added therein in an amount of 40% by weight to prepare the respectively corresponding coating materials.

On calcium silicate sheets of 3 mm in thickness, 150 mm in length and 75 mm in width, the respective coating materials prepared in the above were coated by brushing so as to give a coating thickness of about 100 micrometres. Thereafter, an aqueous phosphoric acid solution was sprayed thereon to effect hardening.

After the coatings were dried, the electrical resistance and 100 MHz electromagnetic shielding effect were measured according to the Advantec method. Results obtained are shown in Table 9 (set out below)

### Example 7

Using an apparatus as illustrated in Fig. 1, 200 g of an aluminium ingot of 99.9% purity was set in a crucible made of graphite, and was melted at 800°C to make the melt 1. The resulting melt 1 was flowed out and dropped from the nozzle 2, and nitrogen gas was sprayed from the atomizing nozzle 3 against the dropping melt 1 under a pressure of 80 kg/cm² to form droplets 5. The droplets 5 were caused to collide against a cone type rotating cooler member having a roll diameter of 300 mm∅, a cone angle of 90° and a revolution number of 7,200 rpm to obtain a flaky powder comprising leaf-shaped particles.

The resulting powder was sieved and batched off to give a powder having the shape characteristics of a thickness of 0.5 to 4 micrometres, a minor axis/major axis of from 5 to 500 micrometres, an aspect ratio of not less than 5, and a ratio of the minor axis to the major axis, of from 1 to 10. Yield of the powder obtained was 76%.

### Comparative Example 5

A commercially available aluminium flat-particulate powder was made ready for use. This powder comprises aluminium particles of 99.9% purity, having a thickness of 0.5 to 2.0 micrometres, a minor axis/major axis of from 5 to 500 micrometres, and an aspect ratio of from 10 to 100.

### Experiment 7

Mixed into 42% by weight of coconut oil modified short oil alkyd resin varnish, 15% by weight of butylated melamine resin varnish and 11% by weight of a solvent was 32% by weight of the aluminium powder of Example 7 or Comparative Example 5 to prepare the respectively corresponding coating materials.

Onto steel sheets of 3.2 mm in thickness, 200 mm in width and 500 mm in length, was applied a thin film type zinc phosphate formation film treatment as a ground treatment, and thereafter the respective coating materials were coated by brushing so as to give a coating thickness of about 50 micrometres and baked at 110 to 130°C.

With regard to the coatings thus obtained, their cross sections were observed in order to examine the orientation of the pigment aluminium powder. The coating containing the powder of Example 7 had a good orientation, and the coating containing the powder of Comparative Example 5 showed somewhat poor orientation.

With regard to the respective coatings, mirror surface reflectance was also measured and found to be 90% or more for the one containing the powder of Example 7 and about 85% for the one containing the powder of Comparative Example 5. Thus, the powder obtained in the present invention has superior performance also in metallic coatings.

**Table 5**

| (Experiment 3) | | |
|---|---|---|
| Powder used | Particle shape | State of corrosion in aqua regia |
| Example 3 | Leaf-shaped | No change occurred after 24 hrs |
| Comparative Example 1 | Irregular flat | Ground corroded after 24 hrs |

**Table 6**

| (Experiment 4) | | | | | | |
|---|---|---|---|---|---|---|
| Powder used | Amount of powder added (% by weight) | | | | | |
| | 65 | 70 | 75 | 80 | 85 | 90 |
| Example 4 | A | A | A | A | A | A |
| Comparative Example 2 | C | B | A | A | A | A |
| (Evaluation in the table is based on the criterions as follows: C ... Blisters of coatings are seen. B ... Melting-out of iron is seen. A ... No melting-out of iron.) | | | | | | |

**Table 7**

| (Experiment 5) | | | |
|---|---|---|---|
| Powder used | 2N-HCl | | Crevice corrosiveness |
| | Right after immersion | One hour after immersion | |
| Example 5 | Not foamed | Solution kept transparent | Good |
| Comparative Example 3 | Vigorously foamed | Solution turned opaque | Poor |

**Table 8**

| (Experiment 5) | |
|---|---|
| Powder used | State of corrosion in aqua regia |
| Example 5 | No blister or peel is seen after 24 hrs. |
| Comparative Example 3 | Bottom blisters were generated after 16 hrs to cause ground corrosion |

**Table 9**

| (Experiment 6) | | |
|---|---|---|
| | Electrical resistance of coatings (Ω·100»m) | 100 MHz electromagnetic shielding effect (dB) |
| Example 6 | 0.8 ∼ 1.5 | 42 |
| Electrolytic powder (dendritic) | 1.0 ∼ 3.6 | 35 |
| Ground electrolytic powder (leafy) | Infinity | 8 |
| Atomized powder (spherical) | Infinity | 4 |

## Claims

1. A powder additive for coating materials, for plastics or for rubbers, comprising particles of an amorphous alloy, said particles having a thickness of 0.5 to 4 micrometres, a minor axis/major axis of length from 5 to 500 micrometres, an aspect ratio (ratio of the major axis to the thickness) of not less than 5, and a ratio of minor axis to major axis of from 1 to 10, the particles being substantially flat and oval or elliptical.

2. A powder additive as claimed in claim 1, wherein said powder comprises at least one of the following:
(1) An amorphous alloy consisting of from 5 to 12% of Ni, from 5 to 25% of Cr, from 0.3 to 5.0% of Mo, from 8 to 13% of P, from 7 to 15% of C, all in atom %, and the balance of Fe and incidental impurities;
(2) an amorphous alloy consisting of from 5 to 40% of Cr, from 15 to 25% of P, all in atom %, and the balance of Ni and incidental impurities;
(3) an amorphous alloy consisting of from 40 to 60% of (Nb, Ta) in atom %, and the balance of Ni and incidental impurities;
(4) an aluminium alloy having the composition represented by the general formula:
AlₐM_{b}X_{c}
(wherein M represents one or more metallic element(s) selected from V, Cr, Mn, Fe, Co, Ni, Cu, Zr, Ti, Mo, W, Ca, Li, Mg and Si; X represents one or more element(s) selected from Y, La, Ce, Sm, Nd, Hf, Nb, Ta and Mm (Misch metal); and a, b and c are such that 50 ≦ a ≦ 95, 0.5 ≦ b ≦ 35 and 0.5 ≦ c ≦ 25 in atom %, respectively) and the balance of incidental impurities;
and comprising an amorphous phase or an amorphous and finely crystalline mixed phase .

3. A method of preparing a powder additive as claimed in claim 1, said method comprising melting an alloy, causing the resulting melt to flow out from a nozzle and jetting a gas onto the melt to form droplets of the melt, followed by cooling to effect solidification thereof, characterized in that a cone- or horn-shaped rotating cooling member is provided in the direcion of flow of said droplets, and said droplets are caused to collide with the surface of said rotating cooling member before they solidify, followed by cooling to effect solidification.

4. A method as claimed in claim 3, wherein at least one of the following is used as a starting material:
(1) An amorphous alloy consisting of from 5 to 12% of Ni, from 5 to 25% of Cr, from 0.3 to 5.0% of Mo, from 8 to 13% of P, from 7 to 15% of C, all in atom %, and the balance of Fe and incidental impurities;
(2) an amorphous alloy consisting of from 5 to 40% of Cr, from 15 to 25% of P, all in atom %, and the balance of Ni and incidental impurities;
(3) an amorphous alloy consisting of from 40 to 60% of (Nb, Ta) in atom %, and the balance of Ni and incidental impurities;
(4) an aluminium alloy having the composition represented by the general formula:
AlₐM_{b}X_{c}
(wherein M represents one or more metallic element(s) selected from V, Cr, Mn, Fe, Co, Ni, Cu, Zr, Ti, Mo, W, Ca, Li, Mg and Si; X represents one or more element(s) selected from Y, La, Ce, Sm, Nd, Hf, Nb, Ta and Mm (Misch metal); and a, b and c are such that 50 ≦ a ≦ 95, 0.5 ≦ b ≦ 35 and 0.5 ≦ c ≦ 25 in atom %, respectively) and the balance of incidental impurities;
and comprising an amorphous phase or an amorphous and finely crystalline mixed phase .

5. A method as claimed in either one of claims 3 and 4, wherein a powder comprising particles having a thickness of 0.5 to 4 micrometres, a minor axis/major axis of length from 5 to 500 micrometres, an aspect ratio (ratio of the major axis to the thickness) of not less than 5, and a ratio of minor axis to major axis, of from 1 to 10 is batched off from said powder after solidification

6. A method as claimed in any one of claims 3 to 5, wherein said gas is jetted under a pressure of not less than 20 kg/cm², said rotating cooling member is cooled to not more than 50°C, and said rotating cooling member is rotated at from 1,000 to 20,000 rpm.

7. A coating composition comprising a powder additive as claimed in either claim 1 or claim 2.

8. A plastics composition comprising a powder additive as claimed in either claim 1 or claim 2.

9. A rubber composition comprising a powder additive as claimed in either claim 1 or claim 2.

10. An article when coated with a coating composition as claimed in claim 7 or comprising a plastics composition as claimed in claim 8 or comprising a rubber composition as claimed in claim 9.

11. A method of coating an article which comprises coating the surface of an article with a coating composition as claimed in claim 7.

## Patentansprüche

1. Pulveradditiv zum Beschichten von Materialien aus Kunststoffen oder Kautschuken bzw. Gummis, umfassend Teilchen einer amorphen Legierung, wobei diese Teilchen eine Dicke von 0,5 bis 4 Mikrometer haben, ein Verhältnis in der Länge von kleiner Achse/großer Achse von 5 bis 500 Mikrometer, ein Streckungsverhältnis (Verhältnis der großen Achse zur Dicke) von nicht weniger als 5, und ein Verhältnis von kleiner Achse zu großer Achse von 1 bis 10, wobei die Teilchen im wesentlichen flach und oval oder elliptisch sind.

2. Pulveradditiv wie in Anspruch 1 beansprucht, worin dieses Pulver wenigstens eines des folgenden umfaßt:
(1) eine amorphe Legierung bestehend aus 5 bis 12 % Ni, von 5 bis 25 % Cr, von 0,3 bis 5,0 % Mo, von 8 bis 13 % P, von 7 bis 15 % C, alles in Atomprozent, und der Rest ist Fe und beiläufige Verunreinigungen;
(2) eine amorphe Legierung bestehend aus 5 bis 40 % Cr, von 15 bis 25 % P, alles in Atomprozent, und der Rest ist Ni und beiläufige Verunreinigungen;
(3) eine amorphe Legierung bestehend aus 40 bis 60 % (Nb, Ta) in Atomprozent, und der Rest ist Ni und beiläufige Verunreinigungen;
(4) eine Aluminiumlegierung mit der Zusammensetzung, die durch die allgemeine Formel:
AlₐM_{b}X_{c}
dargestellt wird (wobei M ein oder mehrere metallische Element(e) darstellt, ausgewählt aus V, Cr, Mn, Fe, Co, Ni, Cu, Zr, Ti, Mo, W, Ca, Li, Mg und Si; X bedeutet eines oder mehrere Element(e) ausgewählt aus Y, La, Ce, Sm, Nd, Hf, Nb, Ta und Mm (Mischmetall); und a, b und c sind derart, daß 50 ≦ a ≦ 95, bzw. 0,5 ≦ b ≦ 35, bzw. 0,5 ≦ c ≦ 25 in Atomprozent sind) und der Rest sind beiläufige Verunreinigungen;
und umfassend eine amorphe Phase oder eine amorphe und feinkristalline Mischphase.

3. Verfahren zur Herstellung eines Pulveradditivs wie in Anspruch 1 beansprucht, wobei diese Methode umfaßt:
Schmelzen einer Legierung, Veranlassen, daß die sich ergebende Schmelze aus einer Düse ausfließt und Aufstrahlen eines Gases auf die Schmelze, um Tröpfchen der Schmelze zu bilden, und anschließendes Abkühlen, um die Verfestigung derselben zu bewirken, dadurch gekennzeichnet, daß ein kegel- oder hornförmiges rotierendes Kühlelementin Richtung des Stromes dieser Tröpfchen vorgesehen ist und diese Tröpfchen veranlaßt werden, mit der Oberfläche dieses rotierenden Kühlelements zusammenzustoßen, bevor sie verfestigen und anschließend Kühlen, um Verfestigung zu bewirken.

4. Verfahren gemäß Anspruch 3, worin wenigstens eines des folgenden als Ausgangsmaterial verwendet wird:
(1) eine amorphe Legierung bestehend aus 5 bis 12 % Ni, von 5 bis 25 % Cr, von 0,3 bis 5,0 % Mo, von 8 bis 13 % P, von 7 bis 15 % C, alles in Atomprozent, und der Rest ist Fe und beiläufige Verunreinigungen;
(2) eine amorphe Legierung bestehend aus 5 bis 40 % Cr, von 15 bis 25 % P, alles in Atomprozent, und der Rest ist Ni und beiläufige Verunreinigungen;
(3) eine amorphe Legierung bestehend aus 40 bis 60 % (Nb, Ta) in Atomprozent, und der Rest ist Ni und beiläufige Verunreinigungen;
(4) eine Aluminiumlegierung der Zusammensetzung, die durch die allgemeine Formel:
AlₐM_{b}X_{c}
dargestellt wird (wobei M ein oder mehrere metallische Element(e) darstellt, ausgewählt aus V, Cr, Mn, Fe, Co, Ni, Cu, Zr, Ti, Mo, W, Ca, Li, Mg und Si; X bedeutet eines oder mehrere Element(e) ausgewählt aus Y, La, Ce, Sm, Nd, Hf, Nb, Ta und Mm (Mischmetall); und a, b und c sind derart, daß 50 ≦ a ≦ 95, bzw. 015 ≦ b ≦ 35, bzw. 0,5 ≦ c ≦ 25 in Atomprozent sind) und der Rest sind beiläufige Verunreinigungen;
und umfassend eine amorphe Phase oder eine amorphe und feinkristalline Mischphase.

5. Verfahren wie in einem der Ansprüche 3 und 4 beansprucht, worin ein Pulver umfassend Teilchen mit einer Dicke von 0,5 bis 4 Mikrometer, einem Längenverhältnis kleine Achse/große Achse von 5 bis 500 Mikrometer, einem Streckungsverhältnis (Verhältnis der großen Achse zur Dicke) von nicht weniger als 5, und einem Verhältnis von kleiner Achse zu großer Achse von 1 bis 10 aus diesem Pulver nach der Verfestigung angesetzt wird.

6. Verfahren gemäß einem der Ansprüche 3 bis 5, wobei dieses Gas unter einem Druck von nicht weniger als 20 kg/cm² aufgestrahlt, das genannte rotierende Kühlelement auf nicht mehr als 50 °C abgekühlt und dieses rotierende Kühlelement bei 1.000 bis 20.000 Upm (Umdrehungen pro Minute) rotiert wird.

7. Überzugs- bzw. Beschichtungszusammensetzung umfassend ein Pulveradditiv wie in einem der Ansprüche 1 oder 2 beansprucht.

8. Kunststoffzusammensetzung umfassend ein Pulveradditiv wie in einem der Ansprüche 1 oder 2 beansprucht.

9. Kautschuk- bzw. Gummizusammensetzung umfassend ein Pulveradditiv wie in einem der Ansprüche 1 oder 2 beansprucht.

10. Erzeugnis, beschichtet mit einer Überzugszusammensetzung wie in Anspruch 7 beansprucht, oder umfassend eine Kunststoffzusammensetzung wie in Anspruch 8 beansprucht, oder umfassend eine Kautschukzusammensetzung wie in Anspruch 9 beansprucht.

11. Verfahren zum Beschichten eines Erzeugnisses umfassend das Beschichten der Oberfläche eines Erzeugnisses mit einer Beschichtungszusammensetzung wie in Anspruch 7 beansprucht.

## Revendications

1. Additif pulvérulent pour matières de revêtement, matières plastiques ou caoutchoucs, comprenant des particules d'un alliage amorphe, ces particules ayant une épaisseur de 0,5 à 4 micromètres, un petit axe et un grand axe d'une longueur de 5 à 500 micromètres, un rapport d'aspect (rapport du grand axe à l'épaisseur) non inférieur à 5, et un rapport du petit axe au grand axe de 1 à 10, les particules étant à peu près plates, et ovales ou elliptiques.

2. Additif pulvérulent selon la revendication 1, dans lequel la poudre comprend au moins l'un des composants suivants :
(1) un alliage amorphe consistant en 5 à 12 % de Ni, en 5 à 25 % de Cr, en 0,3 à 5,0 % de Mo, en 8 à 13 % de P, en 7 à 15 % de C, tous en atomes %, et le reste consistant en fer et en impuretés fortuites ;
(2) un alliage amorphe consistant en 5 à 40 % de Cr, en 15 à 25 % de P, tous en atomes %, et le reste consistant en Ni et en impuretés fortuites ;
(3) un alliage amorphe consistant en 40 à 60 % de Nb, Ta en atomes %, et le reste consistant en Ni et en impuretés fortuites ;
(4) un alliage d'aluminium ayant la composition représentée par la formule générale
AlₐM_{b}X_{c}
(dans laquelle M représente au moins un élément métallique choisi parmi V, Cr, Mn, Fe, Co, Ni, Cu, Zr, Ti, Mo, W, Ca, Li, Mg et Si ; X représente au moins un élément choisi parmi Y, La, Ce, Sm, Nd, Hf, Nb, Ta et Mm (Misch métal) : et a, b et c sont respectivement tels que 50 ≦ a ≦ 95, 0,5 ≦ b ≦ 35 et 0,5 ≦ c ≦ 25 (en atomes %), et le reste consistant en impuretés fortuites ; et
comprenant une phase amorphe ou une phase mixte amorphe et finement cristalline.

3. Procédé de préparation d'un additif pulvérulent selon la revendication 1, dans lequel on fond un alliage, on fait s'écouler la masse en fusion résultante à partir d'une buse et on projette un gaz sur la masse en fusion pour former des gouttelettes de la masse en fusion, puis on refroidit afin d'effectuer sa solidification, caractérisé en ce que l'on dispose un organe de refroidissement rotatif en forme de cône ou de cornet dans la direction d'écoulement de ces gouttelettes, et on provoque la collision des gouttelettes avec la surface de cet organe de refroidissement rotatif, avant qu'elles ne se solidifient, puis on refroidit pour effectuer la solidification.

4. Procédé selon la revendication 3, dans lequel on emploie au moins l'un des composants suivants comme matière de départ :
(1) un alliage amorphe consistant en 5 à 12 % de Ni, en 5 à 25 % de Cr, en 0,3 à 5,0 % de Mo, en 8 à 13 %, de P, en 7 à 15 % de C, tous en atomes %, et le reste consistant en fer et en impuretés fortuites ;
(2) un alliage amorphe consistant en 5 à 40 % de Cr, en 15 à 25 % de P, tous en atomes %, et le reste consistant en Ni et en impuretés fortuites ;
(3) un alliage amorphe consistant en 40 à 60 % de Nb, Ta en atomes %, et le reste consistant en Ni et en impuretés fortuites ;
(4) un alliage d'aluminium ayant la composition représentée par la formule générale
AlₐM_{b}X_{c}
(dans laquelle M représente au moins un élément métallique choisi parmi V, Cr, Mn, Fe, Co, Ni, Cu, Zr, Ti, Mo, W, Ca, Li, Mg et Si ; X représente au moins un élément choisi parmi Y, La, Ce, Sm, Nd, Hf, Nb, Ta et Mm (Misch métal) ; et a, b et c sont respectivement tels que 50 ≦ a ≦ 95, 0,5 ≦ b ≦ 35 et 0,5 ≦ c ≦ 25 (respectivement en atomes %), et le reste consistant en impuretés fortuites ; et
comprenant une phase amorphe, ou une phase mixte amorphe et finement cristalline.

5. Procédé selon l'une quelconque des revendications 3 et 4, dans lequel on prépare une charge d'une poudre comprenant des particules ayant une épaisseur de 0,5 à 4 micromètres, un petit axe et un grand axe d'une longueur de 5 à 500 micromètres, un rapport d'aspect (rapport du grand axe à l'épaisseur) non inférieur à 5, et un rapport du petit axe au grand axe de 1 à 10, à partir de la poudre après solidification.

6. Procédé selon l'une quelconque des revendications 3 à 5, dans lequel le gaz est éjecté sous une pression non inférieure à 20 kg/cm², l'organe de refroidissement rotatif est refroidi jusqu'à pas plus de 50 °C, et l'organe de refroidissement rotatif étant entraîné en rotation à 1 000 jusqu'à 20 000 tr/mn.

7. Composition de revêtement comprenant un additif pulvérulent selon la revendication 1 ou la revendication 2.

8. Composition à base de matière plastique comprenant un additif pulvérulent selon la revendication 1 ou la revendication 2.

9. Composition à base de caoutchouc comprenant un additif pulvérulent selon la revendication 1 ou la revendication 2.

10. Article revêtu avec une composition de revêtement selon la revendication 7, ou comprenant une composition à base de matière plastique selon la revendication 8, comprenant une composition à base de caoutchouc selon la revendication 9.

11. Procédé de revêtement d'un article, selon lequel on revêt la surface d'un article avec une composition de revêtement selon la revendication 7.
